# EUROPEAN PATENT APPLICATION

(11) **EP 3 244 358 A1**
(43) Date of publication of application: **15.11.2017**
(21) Application number: 17170362.2
(22) Date of filing: 10.05.2017
(51) Int. Cl.: G06Q 20/32, G06Q 20/40, G06Q 20/18

(54) **METHODS AND SYSTEMS FOR IDENTITY VERIFICATION AT SELF-SERVICE MACHINES**

(30) Priority: 10.05.2016 US 201615151418
(71) Applicant: Danal, Inc., San Jose, CA 95134 (US)
(72) Inventor: BANERJEE, Atreedev, Santa Clara, CA 95054 (US); JALLU, Vijay Reddy, Sunnyvale, CA 94087 (US)
(74) Representative: Barnfather, Karl Jon

(57) **Abstract**

A method for verifying at least one aspect of an identity of a user of a self-service machine, the method characterized by using an aggregator system for performing the steps comprising:
receiving a mobile device identifier inputted by the user at the self-service machine;
communicating, using communications circuitry, a verification message to a mobile device associated with the mobile device identifier;
receiving, using the communications circuitry, a response to the verification message;
confirming, using processing circuitry, that the mobile device associated with the mobile device identifier is in possession of the user based on the response;
communicating, using the communications circuitry, the mobile device identifier to a carrier system associated with a service network on which the mobile device operates;
receiving, using the communications circuitry, from the carrier system Customer Relationship Management (CRM) information about a user that corresponds to the mobile device identifier;
communicating, using the communications circuitry, to the self-service machine at least one knowledge-based authentication query based on the CRM information;
receiving, using the communications circuitry, from the self-service machine a response to the at least one knowledge-based authentication query provided by the user;
determining, using the processing circuitry, whether the response to the at least one knowledge-based authentication query provided by the user is correct;
determining, using the processing circuitry, that the mobile device associated with the mobile identifier is within a particular proximity of the self-service machine;
verifying, using the processing circuitry, the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine; and
communicating, using the communications circuitry, to the self-service machine that the at least one aspect of the identity of the user has been verified.

## Description

The present disclosure relates to transactions made on a self-service machine, and more particularly relates to verifying the identity of a user of a self-service machine using customer relationship management (CRM) information stored in a mobile network carrier system.

### Background

Self-service machines allow merchants to provide services independent of involvement of direct service employees. Self-service machines are replacing many face-to-face service interactions with the intention of making service transactions more convenient, faster, and more cost-effective. Examples of self-service machines include automatic teller machines (ATM), product vending machines, self-service car rental machines, and self-service ticket purchasing machines. Self-service machines are not capable of properly identifying and verifying consumers. As a result, there are limitations regarding the category of goods and services being dispensed or otherwise sold through self-service machines due to concerns regarding fraud issues, age verification challenges, stolen identity issues, as well as over the limit purchases (i.e., limiting the number of times a particular consumer is permitted to make a purchase or enter into a transaction).

### Summary of the Invention

The present invention seeks to avoid or at least mitigate the problems of the prior art and as such methods computer readable medium and systems are presented for verifying the identify, or aspects of the identity of a consumer at a self-service machine, such as a vending machine. The consumer provides the vending machine with a mobile device identifier with which the consumer is associated in order for the verification process to take place. The self-service machine communicates with an aggregator system, which, in turn, communicates with a carrier system. The aggregator system determines whether the mobile device associated with the mobile device identifier is in possession of the consumer, whether the consumer is the actual person associated with the mobile device, and whether the mobile device is within a proximate vicinity of the self-service machine. Further aspects and features of the invention will be apparent from the following description and appended claims.

### Brief Description of the Figures

The above and other features of the present disclosure, its nature and various advantages will be more apparent upon consideration of the following detailed description, taken in conjunction with the accompanying drawings in which:
FIG. 1 is a block diagram of illustrative systems and devices implemented in a network environment in accordance with some embodiments of the present disclosure;
FIG. 2 is a block diagram showing illustrative paths of communication between systems and devices in accordance with some embodiments of the present disclosure;
FIG. 3 is a block diagram of an illustrative aggregator system in accordance with some embodiments of the present disclosure;
FIG. 4 is a block diagram of an illustrative merchant system in accordance with some embodiments of the present disclosure;
FIG. 5 is a block diagram of an illustrative carrier system in accordance with some 9embodiments of the present disclosure;
FIG. 6 is a block diagram of an illustrative client device in accordance with some embodiments of the present disclosure;
FIG. 7 is a flow chart of illustrative steps performed by a self-service machine when verifying a consumer's identity in accordance with some embodiments of the present disclosure; and
FIG. 8 is a flow chart of illustrative steps performed by an aggregator system as part of the process illustrated in FIG. 7 in accordance with some embodiments of the present disclosure.

### Detailed Description

The present disclosure is directed towards using customer relationship management (CRM) information stored at a carrier system in connection with a transaction involving a self-service machine.

As used herein, the term "self-service machine" shall refer to any suitable component, device, sub-system, or whole system of a merchant system with which a consumer is able to directly interact in order to enter into a transaction with a merchant with which the self-service machine is associated. Examples of a self-service machine include a product vending machine, an automatic teller machine (ATM), a self-service car rental machine, a self-service ticket purchasing machine, any other suitable terminal with which a consumer can interact in order to enter into a transaction with the merchant, or any combination thereof. A self-service machine can be, for example, a point of sale device that does not require human interaction from the merchant side in order to transact a sale with a consumer. A self-service machine may be located in a retail establishment, in a public location, in a commercial location, or any other suitable location where a merchant identifies a need to provide the ability for a consumer to enter into a transaction with the merchant system.

A self-service machine, in accordance with the present disclosure, is able to verify a consumer's identity, certain aspects of the consumer's identity (i.e., biographical information), or both. In some embodiments, this is accomplished using an aggregator system that is communicatively coupled to the self-service machine. The aggregator system is an entity that is trusted (i.e., white-listed) by one or more carrier systems. A carrier system, also referred to as a mobile operator, provides mobile network services to the consumer's mobile client device. In the United States, examples of carrier systems include systems operated by Verizon, AT&T, and Sprint, among others. The aggregator system is communicatively coupled to the carrier systems. For purposes of clarity and brevity, and not by way of limitation, the present disclosure will be described in the context of a single carrier system, but it will be understood that multiple carrier systems can be accommodated.

In one suitable approach, the self-service machine prompts the consumer for the consumer's mobile device phone number or any other suitable mobile device identifier that can be used to identify and communicate with the consumer's mobile device (e.g., an identifier provided by a proprietary application installed on the consumer's mobile device). The self-service machine communicates the phone number to the aggregator system using any suitable wired or wireless network. The aggregator system generates and sends a verification message to the mobile device associated with the phone number provided by the consumer. For example, the aggregator system can send an SMS message addressed to the phone number provided. The message can contain, for example, a URL (e.g., embedded in a selectable link) that the user can select in order to indicate to the aggregator system that the verification message has been received by the consumer on the consumer's mobile device. That is, the link may point to a server controlled by the aggregator system, which will process the selection of the link in the message as an indication that the consumer has received the verification message on the mobile device associated with the phone number provided by the consumer.

The aggregator system communicates the phone number to the carrier system that services the mobile device associated with the phone number entered by the consumer. The carrier system accesses CRM information for the account associated with the provided phone number. CRM information, as referred to herein, is understood to refer to any suitable user-specific data, including personal information such as, for example, name, address, telephone number, email address, client device location (e.g., GPS data), payment or any other financial information, any other suitable personal information, or any combination thereof. A carrier system typically stores CRM information associated with its users. Attempts are made by the carrier system to keep its stored CRM information secure because of the sensitive nature of the personal information contained therein. The carrier system communicates certain of the CRM information to the aggregator system, which is trusted by the carrier system. The aggregator processes the CRM information to generate one or more knowledge-based authentication queries, which may include for example one or more questions and a respective number of multiple choice answers, one of which is the correct answer for each of the questions. These queries are communicated by the aggregator system to the self-service machine. The self-service machine presents the queries to the consumer who must select an answer for each question.

In some embodiments, the aggregator system retrieves from the carrier system location information for the mobile device associated with the phone number entered by the consumer. For example, the carrier system is able to locate the mobile device's geographic location using coordinates determined by GPS tracking. Location information may be included as part of the CRM information. The aggregator system uses the location information to confirm that the mobile device is within proximity of the self-service machine with which the consumer is attempting to conduct the transaction.

The aggregator system verifies the identity of the consumer, certain information about the consumer, or both when: 1) the verification message is verified as having been received by the consumer on the consumer's mobile device, 2) the one or more knowledge-based authentication queries have been correctly answered by the consumer at the self-service machine, and 3) the mobile device associated with the phone number provided by the consumer is within proximity of the self-service machine. For example, this verification process can be used at an ATM to prevent fraud by verifying that the consumer attempting to conduct a banking transaction for a particular bank account is actually the bank account holder. As another example, a vending machine can be made capable of selling and dispensing products such as tobacco or alcohol to consumers of legal age by verifying the consumer's age using the information provided by the carrier system CRM information.

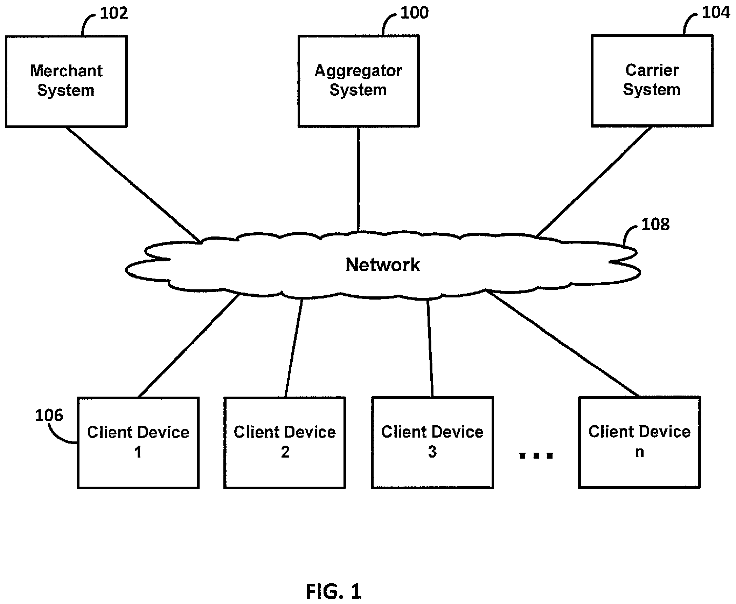

FIG. 1 is a block diagram of illustrative systems and devices implemented in a network environment in accordance with some embodiments of the present disclosure. Aggregator system 100, merchant system 102, carrier system 104, and client device 106 may be coupled via network 108. Network 108 may include or communicate with any suitable one or more network structure or structures, such any suitable local area network (LAN), wide area network (WAN) (e.g., the internet), wireless local area network (WLAN), a mobile communications network, any other suitable network, or any combination thereof. In some embodiments, network 108 may include a carrier network provided and operated by carrier system 104. The lines coupling network 108 to the various systems and devices may represent a wireless coupling, a wired coupling, any other suitable coupling, or any combination thereof. For example, devices and systems may be connected to network 108 through a WiFi or Ethernet connection, with access to the internet. In another example, client device 106 may be coupled to network 108 using one or more mobile communications networks, such as a 3G, 4G, LTE, cellular network, any other suitable mobile communications network, or any combination thereof.

Aggregator system 100 may be any suitable system which acts as an intermediary between two or more systems, such as between client device 106 and carrier system 104, merchant system 102 and carrier system 104, client device 106 and merchant system 102, between any other systems and devices, or any combination thereof. Aggregator system 100 may act as an intermediary by facilitating the communication of information, such as payment information (e.g. credit card information, PayPal information, routing number data, bank account information, billing address, legal name, social security number, any other suitable information related to making a payment, or any combination thereof) and/or registration information (e.g., name, address, email, phone number, social security number, payment information, any other suitable information, or any combination thereof), between two systems. Aggregator system 100 is trusted (i.e., white-listed) by carrier system 104, and may access CRM information stored in carrier system 104 for secure communication to merchant system 102 or client device 106. An example of aggregator system 100 is the system developed and operated by Danal Inc. (doing business as BilltoMobile) located in San Jose, CA, which provides mobile payment services to merchants using data provided by United States carrier systems. In some embodiments of the present disclosure, aggregator system 100 may be configured to provide CRM information to client device 106 or merchant system 102 for use in a transaction via network 108.

Merchant system 102 may be any suitable one or more entities capable of entering into a transaction with a client device or with a consumer associated with a client device. Although a single merchant system 102 is shown, it will be understood that any suitable number of merchant system may be used in the system illustrated by FIG. 1 in accordance with the present disclosure. Examples of a transaction include a purchase transaction for goods, services, or both provided by merchant system 102, a money transfer, a bill payment, a transaction that results in access to banking information, banking services, or both, any other suitable transaction, or any combination thereof. Merchant system 102 may include, for example, a web server that publishes a website which requires personal information (e.g., payment information, registration information). Examples of merchant system 102 include systems operated by Amazon.com, Citibank, freecreditscore.com, among others. In some embodiments, merchant system 102 may be one or more self-service machines or may include, as a component, one or more self-service machines. In some embodiments, merchant system 102 may be configured to communicate with client device 106 (e.g., enable a transaction) using network 108. Merchant system 102 may, likewise, be configured to communicate with aggregator system 100, carrier system 104, or both, using network 108.

Carrier system 104 may be any suitable system which provides mobile network services to client device 106. Providing mobile network services to client device 106 may include providing a carrier network to client device 106. For example, a carrier system may be a system operated by Verizon, Sprint, or AT&T.

Client device 106 is any suitable hardware, software, or both that is configured to provide communications services using the mobile network provided by carrier system 104. Client device 106 may also provide a computing platform on which any suitable applications can be executed and to which any suitable hardware components can interface. In some embodiments, a client device of the present disclosure may be a mobile phone. A mobile phone may be associated with a mobile phone number, a carrier system, any other mobile phone identification information, or any combination thereof. A client device may be a tablet device, laptop device, any other suitable client device, mobile or otherwise, or any combination thereof. In some embodiments, carrier system 104 may include or have access to CRM information associated with client device 106, and may be configured to communicate the CRM information to aggregator system 100 via network 108.

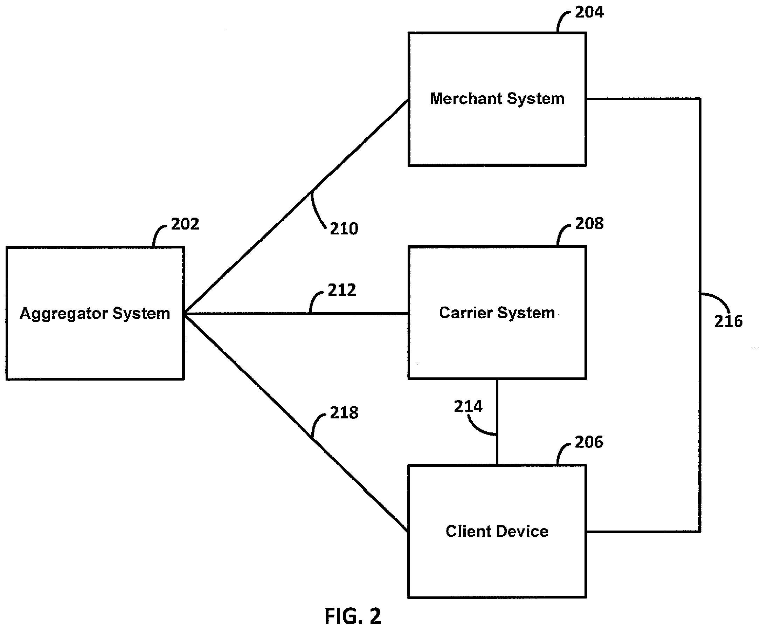

FIG. 2 is block diagram showing illustrative paths of communication between the systems and devices of FIG. 1 in accordance with some embodiments of the present disclosure. Aggregator system 202 may be configured to communicate with merchant system 204, carrier system 208, and client device 206 via communications channels 210, 212, and 218 respectively. Merchant system 204 may be configured to communicate with aggregator system 202 and client device 206 via communication channels 210 and 218 respectively. Client device 206 may be configured to communicate with merchant system 204, aggregator system 202, and carrier system 208 via communication channels 216, 218, and 214 respectively. Carrier system 208 may be configured to communicate with aggregator system 202 and client device 206 via communication channels 212 and 214 respectively. Communication between systems and devices may include communicating over a network, such as network 108 of FIG. 1, and may include receiving data, sending data, or both.

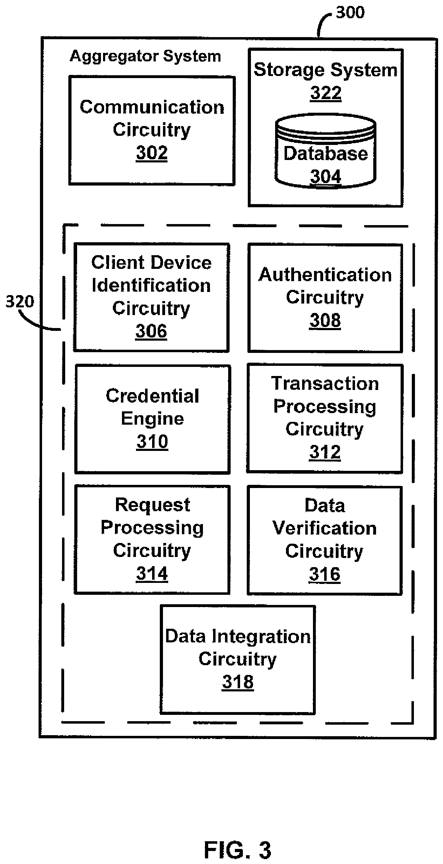

FIG. 3 is a block diagram of illustrative aggregator system 300 in accordance with some embodiments of the present disclosure. Aggregator system 300 may be any suitable aggregator system, such as aggregator system 100 of FIG. 1 or aggregator system 202 of FIG. 2. In some embodiments, aggregator system 300 may be implemented in a network environment, such as that of FIG. 1. Aggregator system 300 may include any suitable software, hardware, or both configured to implement the features as described herein. For example, aggregator system 300 may include server hardware and software. Aggregator system 300 may include communication circuitry 302, storage system 322, and processing equipment 320.

Communication circuitry 302 may be configured with any suitable software, hardwired instructions, or both to communicate with database 304 and processing equipment 320, and may include inputs, outputs, any other mechanisms which facilitate communication with other systems and devices, or any combination thereof. An input or output is a relative communication channel that can be used to receive or send data, respectively. A communication channel may be established as, for example, an IP protocol-based communications session using any suitable network infrastructure, including the Internet, any proprietary LAN, WAN, any other suitable network infrastructure, or any combination thereof. Inputs and outputs can be implemented as one or more physical ports, a data storage device, any other suitable hardware interface, software interface, or any combination thereof. For example, aggregator system 300 may include a carrier input coupled to a carrier system and configured to receive data from the carrier system, a carrier output coupled to the carrier system and configured to output data to the carrier system, a merchant input coupled to a merchant system and configured to receive data from the merchant system, a merchant output coupled to the merchant system and configured to output data to the merchant system, a client device input coupled to a client device and configured to receive data from the client device, a client device output coupled to the client device and configured to output data to the client device, any other suitable input or output, or any combination thereof. While different inputs and outputs are described, it will be understood that they need not be separate components and two or more of the inputs and/or outputs may be implemented as a single component that can be used to send or receive data relative to more than one destination or source, respectively. For example, communication circuitry 302 may include a transceiver, such as an Ethernet card, or any other suitable device or circuitry which facilitates communication with other systems and devices.

Storage system 322 may include any suitable hardware, software, or both for implementing an organized data storage system capable of storing one or more databases and information related to, for example, merchant data, client device data, user data, authentication, rules, and carrier data. For example, storage system 322 may include database 304. In some embodiments, storage system 322 may store information which is not stored in database 304, such as information related to, for example application programming interfaces (APIs), HTML for content pages, any other suitable information, and any combination thereof.

Database 304 may include any suitable hardware, software, or both for implementing an organized data storage system capable of storing information related to, for example, merchant data, client device data, user data, and carrier data. Information related to merchant data may include, for example, stock keeping units (SKUs) related to goods for sale, customer service contact information (e.g., a phone number, an email address, a hyperlink for a website), data related to criteria for revoking authentication, any other merchant data, or any combination thereof. Information related to client device data may include, for example, a mobile device number, identification information associated with a client device, any other client device data, or any combination thereof. In some embodiments, database 304 may store encrypted information. For example, hashed information may be generated using a hash operation, and the hashed information may be stored in database 304. It should be understood that aggregator system 300, or any processing equipment or database thereof, such as database 304, may temporarily store CRM information associated with a user solely for the purpose of providing information where aggregator system 300 acts as an intermediary between systems and client devices, such that the user's privacy is preserved. For example, aggregator system 300 may temporarily store CRM information associated with a user of a client device until the information is communicated to a merchant system, where aggregator system 300 is configured to act as an intermediary between the merchant system and the client device or between the merchant system and the carrier system. If aggregator system 300, or any processing equipment or database thereof is deemed to be a trusted system by a carrier system that stores CRM information, and if permission is granted to aggregator system 300 by the carrier system, then aggregator system 300 or any processing equipment or database thereof may be configured to store CRM information.

Processing equipment 320 may be any suitable hardware, software, or both configured to process data received from other systems and devices (e.g., a client device, a merchant system, a carrier system, or any other suitable system or device), process data to be output to other systems and devices, generate data (e.g., generate authentication information), analyze data (e.g., identify a client device based on identification information), and perform other tasks. In some embodiments, processing equipment 320 may include one or more circuitries for performing the functionality as described herein, such as client device identification circuitry 306, authentication circuitry 308, credential engine 310, transaction processing circuitry 312, request processing circuitry 314, data verification circuitry 316, data integration circuitry 318, any other suitable processing equipment, or any combination thereof. The circuitries within processing equipment 320 may communicate with one another to implement the features as described herein. Additionally, the circuitries within processing equipment 320 may all be implemented together on one or more devices. In some embodiments, processing equipment 320 may communicate with communication circuitry 302 and database 304 to retrieve or transmit information (e.g. identification information, authentication information, any other suitable information, or any combination thereof). For example, processing equipment 320 may send identifying information associated with a client device, such as a mobile phone number, to database 304 to retrieve additional information related to the client device or user in possession of the client device.

Client device identification circuitry 306 may be configured with any suitable software, hardwired instructions, or both to identify a client device based on client device identification information. For example, client device identification circuitry 306 may be at least a portion of one or more integrated circuit processors. Identifying a client device may enable aggregator system 300 to access information associated with the client device, to communicate with the client device, to authenticate the client device, to process a transaction on the client device, to perform any other suitable action, or any combination thereof. A client device may be identified, for example, by way of a mobile originated (MO) message identification technique, a mobile terminated (MT) identification technique, a header enrichment identification technique, any other suitable identification technique, or any combination thereof. In some embodiments, client device identification circuitry 306 may be configured to store client device identification information in a database, such as database 304, and may be configured to identify a client device based at least in part on information stored in database 304. Client device identification information may include, for example, information identifying a mobile phone number associated with the client device, information identifying a carrier system associated with the client device, information identifying software or hardware of the client device, information identifying a user in possession of the client device, any other suitable identification information, or any combination thereof. For example, client device identification circuitry 306 may identify a client device by identifying and storing a mobile phone number associated with a client device based on client device identification information which is received from a carrier system.

Authentication circuitry 308 may be configured with any suitable software, hardwired instructions, or both to authenticate a client device. For example, authentication circuitry 308 may be at least a portion of one or more integrated circuit processors. In some embodiments, authenticating a client device may allow the client device to receive or request protected information (e.g., payment information), for example, as a part of a transaction. Authenticating a client device may include authenticating a user in possession of the client device. In some embodiments, authenticating a user in possession of a client device may include verifying the identity of the user. Verifying a user's identity may include, for example, requesting the user to provide uniquely identifying information, requesting the user to provide a unique one-time pin, requesting the user to send a particular MO message, requesting the user to send a particular silent MO message, requesting the user to complete any other suitable request, or any combination thereof. In some embodiments, authenticating a client device may include comparing any provided information related to a user in possession of a client device to any information stored in database 304, for example, to detect differences between the provided information and the information stored in database 304. In some embodiments, authentication circuitry 308 may be further configured to generate data which can be used to prove authentication, such as authentication keys, credential information, any other suitable information, or any combination thereof. For example, authentication circuitry 308 may be configured to generate credentials for an authenticated user in possession of a client device.

Credential engine 310 may be any suitable hardware, software, or both configured to determine criteria for revoking authentication for an identified client device. Revoking authentication for an identified client device may prohibit the client device from participating in interactions which require authentication (e.g., requesting protected information for use in a transaction). In some embodiments, revoking authentication for an identified client device may include invalidating credentials for an authenticated user in possession of the client device. Credential engine 310 may be configured to define criteria based on rules for revoking authentication received from a plurality of interested parties. Criteria may include events and conditions which, when met, indicate that authentication should be revoked. The rules received from a plurality of interested parties may comprise multiple types, and in some embodiments credential engine 310 may determine criteria which comprise only one rule of each type. Credential engine 310 may be configured to combine rules received from a plurality of interested parties based on a priority associated with each rules. Interested parties may be any suitable source from which information associated with the client device may be received (e.g. carrier systems, financial institutions, utility companies, government organizations, universities, schools, any other suitable sources, or any combination thereof), a country in which the client device operates, any other suitable interested party, or any combination thereof.

Transaction processing circuitry 312 may be configured with any suitable software, hardwired instructions, or both to process a transaction on a client device such as client device 106 of FIG. 1b or on a merchant system device, such as a self-service machine. For example, transaction processing circuitry 312 may be at least a portion of one or more integrated circuit processors. In some embodiments, transaction processing circuitry 312 may use information stored in database 304 to process a transaction. Processing a transaction may include, for example, submitting payment information, completing a sale, any other suitable process, or any combination thereof. For example, a user attempting to make a purchase transaction on a client device may be redirected from a webpage of a merchant system to a webpage associated with aggregator system 300, and transaction processing circuitry 312 may process the purchase transaction.

Request processing circuitry 314 may be configured with any suitable software, hardwired instructions, or both to process requests from other systems and devices, such as merchant system 102 of FIG. 1, carrier system 104 of FIG. 1, and client device 106 of FIG. 1. For example, request processing circuitry 314 may be at least a portion of one or more integrated circuit processors. Requests may include a request to output information, a request to accept information, such as a rule, a request to validate information, a request to process a transaction, any other suitable request, or any combination thereof. In some embodiments, one or more requests may be received by communication circuitry 302, and passed from communication circuitry 302 to request processing circuitry 314. Request processing circuitry 314 may determine any suitable response to each of the one or more requests, such as processing information, retrieving information, transmitting information, any other suitable response, or any combination thereof. In some embodiments, request processing circuitry 314 may be configured to process and/or respond to requests received from other circuitries within processing equipment 320. For example, request processing circuitry 314 may receive a request for information associated with a client device, and may in response retrieve information from database 304 and communicate the information to communication circuitry 302 to be output.

Data verification circuitry 316 may be configured with any suitable software, hardwired instructions, or both to verify information associated with a client device, such as client device 106 of FIG. 1, with a consumer associated with a client device, or both. For example, data verification module 316 may be at least a portion of one or more integrated circuit processors. In one embodiment, aggregator system 300 may receive information associated with a client device from one or more sources, and data verification circuitry 316 may be configured to verify the information. In another embodiment, request processing circuitry 314 may receive a request from a merchant system to verify information associated with a client device, and data verification circuitry 316 may verify the information. Verification may include comparing received information to information stored in database 304, comparing received information to information received from one or more sources, deterministic matching, probabilistic matching, fuzzy matching, any other suitable verification technique, or any combination thereof. In some embodiments, verifying information associated with a client device may include verifying information associated with a user in possession of the client device. In some embodiments, data verification circuitry 316 may generate knowledge-based authentication queries using, for example, CRM information received from a carrier system, such as carrier system 208 or carrier system 104. In some embodiments, verification circuitry 316 may use proximity information to verify that a client device is located within a particular distance from a merchant system (e.g., a self-service machine). In general, verification circuitry 316 may be used to verify the identity of a consumer at a self-service machine by verifying information about the consumer's client device (e.g., mobile device), about the consumer's personal information using CRM information obtained from a carrier system, and about the proximity of the consumer's client device relative to the self-service machine.

Data integration circuitry 318 may be configured with any suitable software, hardwired instructions, or both to integrate information associated with a client device which is received from one or more sources. For example, data integration circuitry 318 may be at least a portion of one or more integrated circuit processors. In one embodiment, aggregator system 300 may receive information associated with a client device from one or more sources, and data integration circuitry 318 may integrate the data received from the one or more sources. Data integration may include, for example, eliminating inconsistencies between information from different sources or between information received from one source and information stored in a database (e.g., database 304), eliminating duplicate information from different sources or between information received from one source and information stored in a database (e.g., database 304), any other suitable integration technique, or any combination thereof. Sources may include interested parties such as, for example, carrier systems, financial institutions, utility companies, government organizations, universities, schools, any other suitable sources, or any combination thereof.

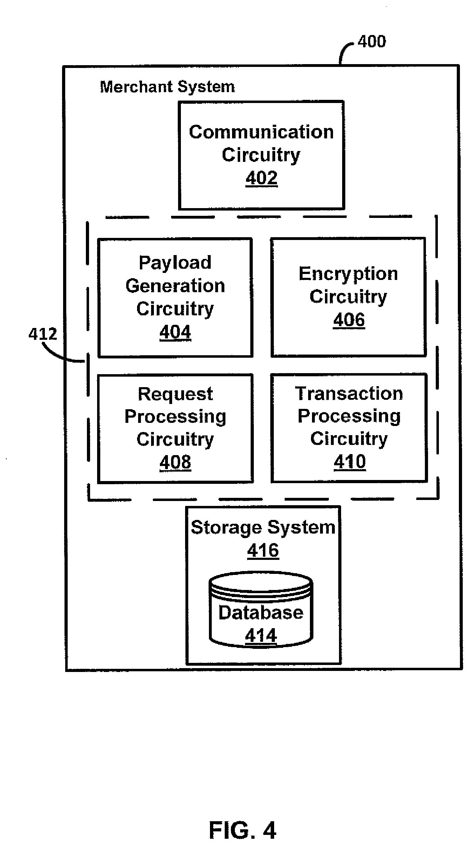

FIG. 4 is a block diagram of illustrative merchant system 400 in accordance with some embodiments of the present disclosure. Merchant system 400 may be any suitable merchant system, for example, merchant system 102 of FIG. 1 or merchant system 204 of FIG. 2. In some embodiments, merchant system 400 may be implemented in a network environment, such as that of FIG. 1. Merchant system 400 may include any suitable software, hardware, or both configured to implement the features as described herein. For example, merchant system 400 may include server hardware and software. Merchant system 400 may include communication circuitry 402, storage system 416, and processing equipment 412.

Communication circuitry 402 may be configured with any suitable software, hardwired instructions, or both to communicate with database 414 and processing equipment 412, and may include inputs, outputs, any other mechanisms which facilitate communication with other systems and devices, or any combination thereof. An input or output is a relative communication channel that can be used to receive or send data, respectively. A communication channel may be established as, for example, an IP protocol-based communications session using any suitable network infrastructure, including the Internet, any proprietary LAN, WAN, any other suitable network infrastructure, or any combination thereof. Inputs and outputs can be implemented as one or more physical ports, a data storage device, any other suitable hardware interface, software interface, or any combination thereof. For example, merchant system 400 may include a carrier input coupled to a carrier system and configured to receive data from the carrier system, a carrier output coupled to the carrier system and configured to output data to the carrier system, an aggregator input coupled to an aggregator system and configured to receive data from the aggregator system, an aggregator output coupled to the aggregator system and configured to output data to the aggregator system, a client device input coupled to a client device and configured to receive data from the client device, a client device output coupled to the client device and configured to output data to the client device, any other suitable input or output, or any combination thereof. In the context of the present disclosure, it may be preferential for merchant system 400 to not include a carrier input and a carrier output. That is, merchant system 400 need not be able to communicate with a carrier system in preferred embodiments of the present invention. While different inputs and outputs are described, it will be understood that they need not be separate components and two or more of the inputs and/or outputs may, indeed be implemented as a single component that can be used to send or receive data relative to more than one destination or source, respectively. For example, communication circuitry 402 may include a transceiver, such as an Ethernet card, or any other suitable device or circuitry which facilitates communication with other systems and devices.

In some embodiments, communication circuitry 402 includes hardware, software, or both for detecting client devices within the proximity of merchant system 400 (e.g., when merchant system 400 is a self-service machine or any suitable point-of-sale device). For example, communication circuitry 402 may include any suitable transceiver(s) that provides for Bluetooth connectivity, RFID detection capability, near field communication (NFC) connectivity, any other suitable proximity-based communications or detection technology, or any combination thereof.

Storage system 416 may include any suitable hardware, software, or both for implementing an organized data storage system capable of storing one or more databases and information related to, for example, merchant data, client device data, user data, authentication, rules, and carrier data. For example, storage system 416 may include database 414. In some embodiments, storage system 416 may store information which is not stored in database 414, such as information related to merchant data, for example APIs, HTML for content pages, any other suitable information, and any combination thereof. In some embodiments, merchant system 400 may be configured to communicate any information stored in storage system 416 or in database 414 to a trusted aggregator system, such as aggregator system 300.

Database 414 may include any suitable hardware, software, or both for implementing an organized data storage system capable of storing information related to, for example, merchant data, client device data, user data, and carrier data. Information related to merchant data may include, for example, SKUs related to goods for sale, customer service contact information (e.g., a phone number, an email address, a hyperlink for a website), payload information, data related to criteria for revoking authentication, any other merchant data, or any combination thereof. Information related to client device data may include, for example, a mobile device number, identification information associated with a client device, any other client device data, or any combination thereof. Information related to user data may include, for example, authentication information for an authenticated user, credential information for an authenticated user, any other user related information, or any combination thereof. Carrier data may include, for example, the carrier network associated with a client device. In some embodiments, database 414 may store information in an encrypted form. For example, hashed information may be generated using a hash operation, and the hashed information may be stored in database 414.

Processing equipment 412 may be any suitable hardware, software, or both configured to process data received from other systems and devices (e.g., a client device, an aggregator system, or any other suitable system or device), process data to be output to other systems and devices, generate data, analyze data (e.g., confirm authentication information provided by a client device), and perform other tasks. In some embodiments, processing equipment 412 may include one or more circuitries for performing the functionality as described herein, such as payload generation circuitry 404, encryption circuitry 406, request processing circuitry 408, transaction processing circuitry 410, any other suitable processing equipment, or any combination thereof. The circuitries within processing equipment 412 may communicate with one another to implement the features described herein. Additionally, the circuitries within processing equipment 412 may all be implemented together on one or more devices. Processing equipment 412 may communicate with communication circuitry 402 and database 414 to retrieve and/or transmit information. For example, processing equipment 412 may retrieve credential information associated with a user in possession of a client device from database 414 before allowing a transaction to be made on the client device.

Payload generation circuitry 404 may be configured with any suitable software, hardwired instructions, or both to generate a payload. For example, payload generation circuitry 404 may be at least a portion of one or more integrated circuit processors. A payload is data which allows a client device to initiate communication (e.g., through API calls) with an aggregator system. A payload may be generated by payload generation circuitry 404, subsequently passed to encryption circuitry 406 to be encrypted, and the encrypted payload may be passed to a client device, such as client device 106 of FIG. 1. In some embodiments, a payload may be generated by combining correlation identification information, a timestamp value, and a nonce value. Correlation identification information may include, for example, merchant generated identification information which is associated with a particular client device transaction. In some embodiments, correlation identification information may be a user identification value (e.g. a user ID) associated with a user in possession of a client device. A timestamp value may include, for example the current date and time. In some embodiments, a timestamp value may be expressed in the format "yyyyMMddHHmmss", where "yyyy" represents the current year, "MM" represents the current month, "dd" represents the current day, "HH" represents the hours, "mm" represents the current minutes, and "ss" represents the current seconds. The timestamp value need not be expressed in the above described format, but may instead be expressed in any suitable format. In some embodiments, a nonce value may include, for example, a random value with a minimum length of 32 characters.

Encryption circuitry 406 may be configured with any suitable software, hardwired instructions, or both to encrypt, decrypt, or both information such as, for example, a payload, information to be stored in database 414, any other suitable information, or any combination thereof. For example, encryption module 406 may be at least a portion of one or more integrated circuit processors. Encrypting information may protect the information from being stolen, hacked, or otherwise leaked to a source which does not have permission to access the information. In some embodiments, information may be encrypted using an encryption key, such as a symmetric key, an asymmetric key, any other suitable encryption method, or any combination thereof. For example, an aggregator system may provision a merchant system with an encryption key, and the merchant system may use the encryption key to encrypt information. In some embodiments, the advanced encryption standard (AES), or any other suitable strong symmetric-key block cipher, should be used when information is encrypted by encryption circuitry 406. In some embodiments, information to be encrypted may include a payload generated by payload generation circuitry 404. Merchant system 400 may pass a payload encrypted by encryption circuitry 406 to a client device, and the encrypted payload may facilitate client-initiated interaction between a client device and an aggregator system. An encrypted payload may be unique for a client device, but not unique for each request made by the client device.

Request processing circuitry 408 may be configured with any suitable software, hardwired instructions, or both to process requests from other systems and devices, for example, carrier system 104 of FIG. 1, aggregator system 100 of FIG. 1, or client device 106 of FIG. 1. For example, request processing circuitry 408 may be at least a portion of one or more integrated circuit processors. Requests may include a request to output information (e.g., identification information or authentication information), a request to accept information, any other suitable request, or any combination thereof. In some embodiments, one or more requests may be received by communication circuitry 402 and passed from communication circuitry 402 to request processing circuitry 408. Request processing circuitry 408 may determine an appropriate response to each of the one or more requests, for example, processing information, generating information, analyzing information, communicating with another circuitry within processing equipment 412, transmitting data to database 414, receiving data from database 414, any other appropriate response, or any combination thereof. In some embodiments, request processing circuitry may process, respond to, or both, requests received from other circuitries within processing equipment 412.

Transaction processing circuitry 410 may be configured with any suitable software, hardwired instructions, or both to process a transaction made on a client device. For example, transaction processing circuitry 410 may be at least a portion of one or more integrated circuit processors. Processing a transaction may include, for example, submitting payment information, completing a sale, any other suitable process, or any combination thereof. A transaction may be a purchase transaction, a registration, any other suitable process, or any combination thereof. In some embodiments, transaction processing circuitry 410 may use data stored in database 414 to process a transaction. In other embodiments, transaction processing circuitry 410 may use data received from another system, such as an aggregator system, to process a transaction. For example, a client device may visit a website published by merchant system 400 to make a purchase transaction, and merchant system 400 may receive information from an aggregator system, such as aggregator system 100 of FIG. 1, to process the purchase transaction. In some embodiments, transaction processing circuitry 410 may pre-populate transaction data fields with information received from another system or device, or information received from database 414.

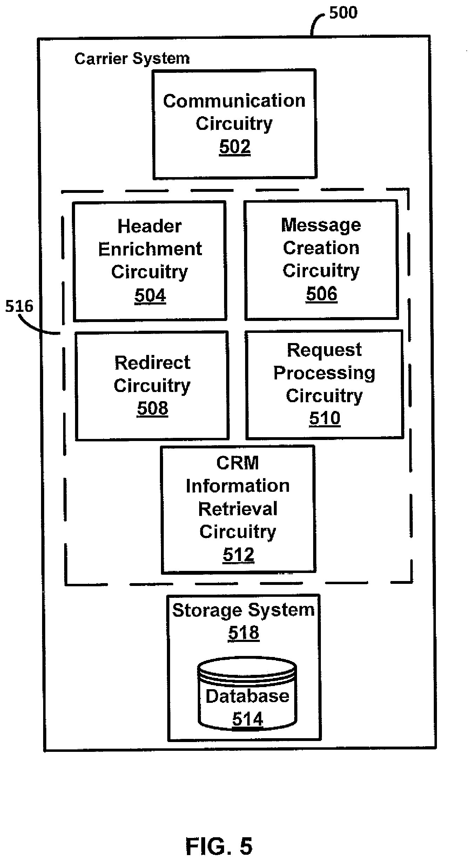

FIG. 5 is a block diagram of illustrative carrier system 500 in accordance with some embodiments of the present disclosure. Carrier system 500 may be any suitable carrier system, such as carrier system 208 of FIG. 2 or carrier system 104 of FIG. 1. In some embodiments, carrier system 500 may be implemented in a network environment, such as that of FIG. 1. Carrier system 500 may include any suitable software, hardware, or both configured to implement the features as described herein. For example, carrier system 500 may include server hardware and software. Carrier system 500 may include communication circuitry 502, storage system 518, and processing equipment 516.

Communication circuitry 502 may be configured with any suitable software, hardwired instructions, or both to communicate with database 514 and processing equipment 516, and may include inputs, outputs, any other mechanisms which facilitate communication with other systems and devices, or any combination thereof. An input or output is a relative communication channel that can be used to receive or send data, respectively. A communication channel may be established as, for example, an IP protocol-based communications session using any suitable network infrastructure, including the Internet, any proprietary LAN, WAN, any other suitable network infrastructure, or any combination thereof. Inputs and outputs can be implemented as one or more physical ports, a data storage device, any other suitable hardware interface, software interface, or any combination thereof. For example, carrier system 500 may include an aggregator input coupled to an aggregator system and configured to receive data from the aggregator system, an aggregator output coupled to the aggregator system and configured to output data to the aggregator system, a merchant input coupled to a merchant system and configured to receive data from the merchant system, a merchant output coupled to the merchant system and configured to output data to the merchant system, a client device input coupled to a client device and configured to receive data from the client device, a client device output coupled to the client device and configured to output data to the client device, any other suitable input or output, or any combination thereof. In the context of the present disclosure, it may be preferential for carrier system 500 to not include a merchant system input and a merchant system output. That is, carrier system 500 need not be able to communicate with a merchant system in preferred embodiments of the present invention. While different inputs and outputs are described, it will be understood that they need not be separate components and two or more of the inputs and/or outputs may, indeed be implemented as a single component that can be used to send or receive data relative to more than one destination or source, respectively. For example, communication circuitry 502 may include a transceiver, such as an Ethernet card, or any other suitable device or circuitry which facilitates communication with other systems and devices.

In some embodiments, communication circuitry 502 may include any suitable hardware, software, or both to communicate with GPS satellites or other GPS-related infrastructure in order to determine location coordinates of any particular one or more client devices.

Storage system 518 may include any suitable hardware, software, or both for implementing an organized data storage system capable of storing one or more databases and information related to, for example, account data, rules, and CRM information associated with a user in possession of a client device. For example, storage system 518 may include database 514. In some embodiments, storage system 518 may store information which is not stored in database 514, and carrier system 500 may be configured to communicate such information to a trusted aggregator system, such as aggregator system 300.

Database 514 may include any suitable hardware, software, or both for implementing an organized data storage system capable of storing information related to, for example, account data and CRM information associated with a user in possession of a client device. In some embodiments, database 514 may store information in an encrypted form. For example, hashed information may be generated using a hash operation, and the hashed information may be stored in database 514.

Processing equipment 516 may be any suitable hardware, software, or both configured to process data received from other systems and devices (e.g., a client device, an aggregator system, or any other suitable system or device), process data to be output to other systems and devices (e.g., CRM information), and perform other tasks. In some embodiments, processing equipment 516 may include one or more circuitries for performing the functionality as described herein, such as header enrichment circuitry 504, message creation circuitry 506, redirect circuitry 508, request processing circuitry 510, CRM information retrieval circuitry 512, any other suitable processing equipment, or any combination thereof. The circuitries within processing equipment 516 may communicate with one another to implement the features as described herein. Additionally, the circuitries within processing equipment 516 may all be implemented together on one or more devices. Processing equipment 516 may be configured to communicate with communication circuitry 502 and database 514 to retrieve and/or transmit information related to user account data, CRM information, any other information, or any combination thereof.

Header enrichment circuitry 504 may be configured with any suitable software, hardwired instructions, or both to insert one or more headers (e.g., a hypertext transfer protocol (http) header) into a request or response, such as an http redirect request or response. For example, header enrichment circuitry 504 may be at least a portion of one or more integrated circuit processors. An http redirect request and/or response may include a message header, and an http header may be inserted into the message header. In some embodiments, http headers inserted into an http redirect request may include client device identification information, and a system receiving an http response where http headers were inserted in a corresponding http request may extract the client device identification information for use or storage (e.g., for use in identifying a client device). For example, a client device on a carrier network operated by carrier system 500 may be redirected from a website published by a merchant system to a website published by an aggregator system using an http redirect request processed by carrier system 500, and header enrichment circuitry 504 may insert one or more http headers in the http redirect request.

Message creation circuitry 506 may be configured with any suitable software, hardwired instructions, or both to create a message such as, for example, a short message service (SMS) message, a silent SMS message, any other suitable type of message, or any combination thereof. For example, message creation circuitry 506 may be at least a portion of one or more integrated circuit processors. In some embodiments, message creation circuitry 506 may be configured to generate an SMS message in response to a request from another system or device, such as aggregator system 100 of FIG. 1 or client device 106 of FIG. 1. For example, carrier system 500 may receive a request to generate an SMS message and send it to a client device, and message creation circuitry may create the SMS message and may specify that the message should be sent to the mobile phone number of the client device.

Redirect circuitry 508 may be configured with any suitable software, hardwired instructions, or both to redirect, for example, a request, information, or both from one system to another system. For example, redirect circuitry 508 may be at least a portion of one or more integrated circuit processors. In some embodiments, redirect circuitry 508 may be configured to redirect an SMS message from one system or device to another system or device. In other embodiments, redirect circuitry 508 may be configured to perform an http redirect from a website associated with one system to a website associated with another system. Redirect circuitry 508 may additionally be configured to perform any other suitable redirect from one system to another system. In some embodiments, redirect circuitry 508 may receive instructions which cause the redirect to be performed. In some embodiments, redirect circuitry 508 may receive such instructions from request processing circuitry 410.

Request processing circuitry 510 may be configured with any suitable software, hardwired instructions, or both to process requests from other systems and devices, for example, aggregator system 100 of FIG. 1 or client device 106 of FIG. 1. For example, request processing circuitry 510 may be at least a portion of one or more integrated circuit processors. Requests may include a request for information, such as user account information or CRM information, any other suitable request, or any combination thereof. One or more requests may be received by communication circuitry 502 and passed from communication circuitry 502 to request processing circuitry 510. Request processing circuitry 510 may determine a suitable response to each of the one or more requests, such as processing information, communicating with another circuitry within processing equipment 516, transmitting data to database 514, receiving data from database 514, any other appropriate response, or any combination thereof. In some embodiments, request processing circuitry 510 may process, respond, or both to requests received from other circuitries within processing equipment 516.

CRM information retrieval circuitry 512 may be configured with any suitable software, hardwired instructions, or both to retrieve CRM information associated with a client device. For example, CRM information retrieval circuitry 512 may be at least a portion of one or more integrated circuit processors. In some embodiments, CRM information may include information related to an account associated with a user in possession of a client device (e.g., payment information, name, address, social security number, etc.), or any other suitable information which may be obtained through interactions between carrier system 500 and a client device. It should be understood that protected information associated with a user, such as a social security number, may only be accessed by trusted systems and devices to which permission has been granted by the user. CRM information retrieval circuitry 512 may be configured to retrieve appropriate CRM information from database 514. In some embodiments, CRM information retrieval circuitry 512 may be configured to retrieve appropriate CRM information in response to a request received from request processing circuitry 510. For example, an aggregator system, such as aggregator system 100 of FIG. 1, may request CRM information associated with an identified client device from carrier system 500, and CRM information retrieval circuitry 512 may retrieve the requested CRM information and provide it to communication circuitry 502 to be output to the aggregator system.

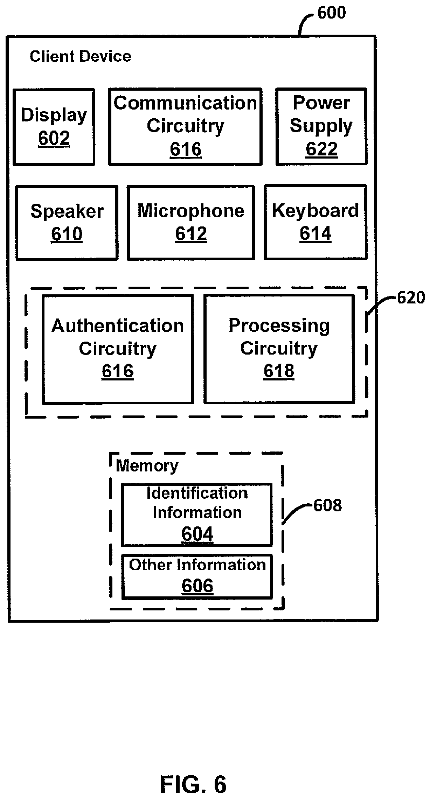

FIG. 6 is a block diagram of illustrative client device 600 in accordance with some embodiments of the present disclosure. Client device 600 may be any suitable client device, such as client device 206 of FIG. 2 or client device 106 of FIG. 1. In some embodiments client device 600 may be implemented in a network environment, such as that of FIG. 1. Client device 600 may include any suitable software, hardware, or both configured to implement the features as described herein. Client device 600 may include display 602, communication circuitry 616, power supply 622, speaker 610, microphone 612, keyboard 614, memory 608, and processing equipment 620.

Display 602 may be configured to display any information stored on or received by client device 600 in any suitable format. Information displayed may include, for example, information requested by a user of client device 600, information related to client device 600, information related to a transaction, information related to an mobile application, information received from another system or device, information to be sent to another system or device, an SMS message, any other suitable information, or any combination thereof. Display 602 may be, for example, a flat panel display such as a liquid crystal display, plasma display, any other suitable display, or any combination thereof.

Power supply 622 may be configured to supply power to client device 600. Power supply 622 may be any suitable internal or external power source such as, for example, a battery.

Speaker 610 may be configured to provide audible sound. The audible sound may be related to a phone call on client device 600, an application running on client device 600, an alarm set on client device 600, a transaction, any other suitable process or application, or any combination thereof.

Microphone 612 may be configured to receive user input such as, for example, audible user input. The inputs received by microphone 612 may include information related to, for example, a phone call on client device 600, a user in possession of client device 600, a transaction, any other suitable information, or any combination thereof.

Keyboard 614 may be configured to receive user input such as, for example, text input. The inputs received by keyboard 614 may be information related to, for example, a message stored on or created on client device 600, a user in possession of client device 600, a transaction, any other suitable information, or any combination thereof.

Communication circuitry 616 may include inputs, outputs, any other mechanisms which facilitate communication with other systems and devices, or any combination thereof. Communication circuitry 616 may be configured with any suitable software, hardwired instructions, or both. An input or output is a relative communication channel that can be used to receive or send data, respectively. A communication channel may be established as, for example, an IP protocol-based communications session using any suitable network infrastructure, including the Internet, any proprietary LAN, WAN, any other suitable network infrastructure, or any combination thereof. Inputs and outputs can be implemented as one or more physical ports, a data storage device, any other suitable hardware interface, software interface, or any combination thereof. For example, client device 600 may include a carrier input coupled to a carrier system and configured to receive data from the carrier system, a carrier output coupled to the carrier system and configured to output data to the carrier system, a merchant input coupled to a merchant system and configured to receive data from the merchant system, a merchant output coupled to the merchant system and configured to output data to the merchant system, an aggregator input coupled to an aggregator system and configured to receive data from the aggregator system, an aggregator output coupled to the aggregator system and configured to output data to the aggregator system, any other suitable input or output, or any combination thereof. While different inputs and outputs are described, it will be understood that they need not be separate components and two or more of the inputs and/or outputs may, indeed be implemented as a single component that can be used to send or receive data relative to more than one destination or source, respectively. For example, communication circuitry 616 may include a transceiver, such as an Ethernet card, or any other suitable device or circuitry which facilitates communication with other systems and devices. Communication circuitry 616 may be configured to communicate with memory 608, processing equipment 620, speaker 610, microphone 612, keyboard 614, power supply 622, and display 602.

In some embodiments, communication circuitry 616 may include any suitable hardware, software, or both for proximity-based communication with, for example, a merchant system, such as merchant system 400 (e.g., in the form of self-service machine). For example, communication circuitry 616 may include any suitable transceiver(s) that provides for Bluetooth connectivity, RFID tags, near field communication (NFC) connectivity, any other suitable proximity-based communications or detection technology, or any combination thereof.

Memory 608 may be one or more suitable memory devices such as, for example, a hard disk drive, flash memory, random access memory (RAM), an optical disk, any other suitable memory device, or any combination thereof. Memory 608 may include identification information 604 and other information 606. Identification information 604 may include any suitable identification information related to client device 600. For example, identification information 604 may include information identifying hardware or software of client device 600, information identifying a mobile phone number associated with client device 600, information identifying a device model of client device 600, information identifying a user in possession of client device 600, information identifying a carrier system associated with client device 600, any other suitable identification information, or any combination thereof. Other information 606 may include any information stored in memory 608 other than identification information 604. For example, other information 606 may store information related to applications, messaging, photos and videos, transactions, merchants, networks, capacity and storage, any other suitable information, or any combination thereof.

Processing equipment 620 may be any suitable hardware, software, or both configured to process data received from other systems and devices (e.g., a merchant system, a carrier system, an aggregator system, or any other suitable system or device), process data to be output to other systems and devices, process data related to mobile applications, and perform other tasks. In some embodiments, processing equipment 620 may include one or more circuitries for performing the functionality as described herein, such as authentication circuitry 616, processing circuitry 618, any other suitable processing equipment, or any combination thereof. The circuitries within processing equipment 620 may communicate with one another to implement the features as described herein. Additionally, the circuitries within processing equipment 620 may all be implemented together on one or more devices. Processing equipment 620 may be configured to communicate with communication circuitry 616, memory 608, speaker 610, microphone 612, keyboard 614, power supply 622, and display 602.

Authentication circuitry 616 may be configured with any suitable software, hardwired instructions, or both to authenticate client device 600. For example, authentication circuitry 616 may be at least a portion of one or more integrated circuit processors. In some embodiments, authenticating client device 600 may include authenticating a user in possession of client device 600. In some embodiments, authentication circuitry 616 may communicate with a system, such as a merchant system or an aggregator system, via communication circuitry 616, in order to authenticate client device 600. Authenticating client device 600 may include prompting a user in possession of client device 600 to input information. Information may be input via display 602, keyboard 614, microphone 612, any other suitable user input, or any combination thereof. Information may include, for example, uniquely identifying information related to the user in possession of client device 600. In some embodiments, authentication circuitry 616 may communicate with memory 608 to authenticate client device 600. For example, memory 608 may store information received from an aggregator system, such as aggregator system 100 of FIG. 1, and subsequent to prompting a user in possession of client device 600 for information, authentication circuitry 616 may compare the entered information to that stored in memory 608.

Processing circuitry 618 may be configured with any suitable software, hardwired instructions, or both to implement any features other than authentication. For example, processing circuitry 618 may be at least a portion of one or more integrated circuit processors. For example, processing circuitry 618 may be configured to run applications, to compute information, to process instructions, to carry out functions related to client device operation, to carry out any other suitable operation or implementation, or any combination thereof.

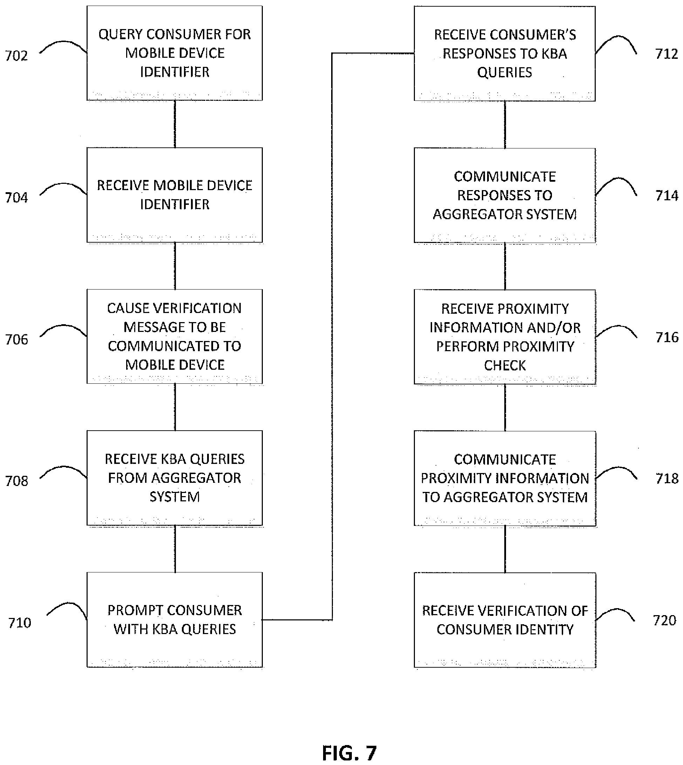

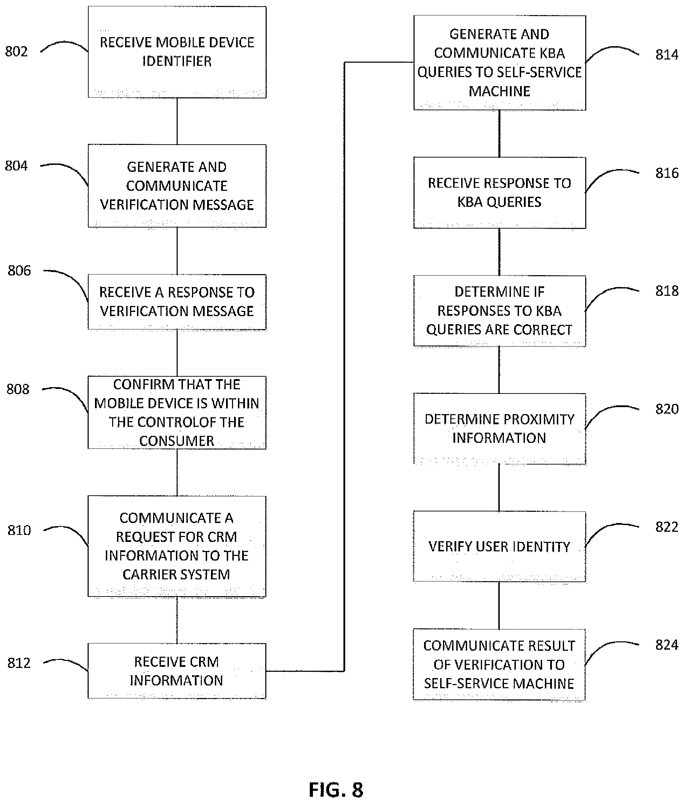

The following discussion will focus on an implementation of the system discussed with respect to FIGS. 1-6 in which a merchant system is at least partially implemented as a self-service machine and in which a client device is implemented as a mobile device, such as a mobile telephone that operates on a carrier network provided by a carrier system. A consumer that is in possession of the mobile device and that has an account registered with the carrier system is able to conduct a transaction or otherwise interact with the self-service machine. The consumer is linked to the mobile device in the carrier system's account information. In order to provide a safer and more enhanced experience, the system of the present disclosure may be configured to verify the identity of the consumer, or aspects of the consumer's biographical information, such as age, date of birth, place of residence, nationality, telephone number, any other suitable biographical information, or any combination thereof. FIG. 7, for example, shows a flow chart of illustrative steps performed by the self-service machine (e.g., self-service machine 102, 204, or 400) as part of a consumer verification process in accordance with some embodiments of the present disclosure. FIG. 8 shows a flow chart of illustrative steps performed by an aggregator system (e.g., aggregator system 100, 202, or 300) as part of the process shown in FIG. 7.

Referring to FIG. 7, at step 702, the self-service machine queries the consumer for a mobile device identifier. For example, when the consumer attempts to begin a transaction or otherwise interact with the self-service machine for a particular purpose, the self-service machine may display a visible query on a display screen asking the consumer to verify identity by entering the consumer's mobile phone number. It will be understood that the self-service machine may provide any suitable prompt, whether visual or auditory, for a mobile device identifier, such as a mobile phone number.

At step 704, the self-service machine receives the mobile device identifier provided by the consumer. For example, any suitable input interface may be provided to allow the consumer to input the consumer's mobile phone number, such as a keyboard, a touch-sensitive display, a microphone, any other suitable input interface, or any combination thereof.

At step 706, once the self-service machine receives the mobile device identifier, the self-service machine causes a verification message to be communicated to the mobile device associated with the mobile device identifier provided by the consumer (e.g., mobile device 106, 206, or 600). For example, the self-service machine may communicate a verification request to an aggregator system using, for example, communication circuitry 402 (FIG. 4). The verification request will include the mobile device identifier (or any suitable information indicative of the mobile device identifier) and may be structured in any suitable way and include any suitable additional data such that the aggregator system is able to generate and communicate a verification message to the mobile device associated with the mobile device identifier. Further discussion regarding the verification message is provided below with respect to FIG. 8. In some embodiments, the self-service machine may be configured to generate the verification message and to communicate it to the mobile device associated with the mobile device identifier without the aggregator system, using, for example, an SMS message transmission (e.g., over network 108 (FIG. 1)).

At step 708, the self-service machine receives at least one knowledge-based authentication query, which may include questions and respective multiple choice answers, using, for example, communications circuitry 402. The queries are directed towards any suitable information that would assist in verifying that the consumer is the user associated with the mobile device identifier provided by the consumer at the self-service machine at step 704. As described below with regard to FIG. 8, the queries may be generated by the aggregator system using CRM information retrieved from the carrier system (e.g., carrier system 104, 208, or 500).

At step 710, the self-service machine displays on a display device or otherwise provides any suitable visual or auditory output on any suitable output device at least a subset of the knowledge-based authentication questions and respective multiple choice answers. It will be understood that the use of multiple choice answers as part of the knowledge-based authentication query is merely illustrative. In some embodiments, the consumer may be prompted to provide an answer to a knowledge-based authentication query by inputting a response directly without the use of multiple choice answers.

At step 712, the self-service machine receives the consumer's responses to the knowledge-based authentication query or queries using any suitable user input interface, such as a keyboard, a touch-sensitive display, a microphone, any other suitable input interface, or any combination thereof.

At step 714, the self-service machine communicates the responses provided by the consumer to the aggregator system, using, for example, communication circuitry 402. The self-service machine may communicate the responses exactly as entered by the consumer, may format the responses or otherwise perform any suitable normalization of the entered data using, for example, processing equipment 412, or any combination thereof.

At step 716, the self-service machine receives proximity information from the mobile device to verify that the consumer's mobile device is within a particular proximate range of the self-service machine. The proximity information may be any suitable information to verify that the mobile device is within range using any suitable communications protocol by way of, for example, communication circuitry 402 and 616. For example, communication circuitry 402 and 406 can communicate using Bluetooth, NFC, RFID, any other suitable technology or protocol, or any combination thereof, in order for the self-service machine to detect the presence of the consumer's mobile device. Communication circuitry 616 may communicate to communication circuitry 402 information that identifies the mobile device, such a mobile device identifier (e.g., a phone number). Using, for example, processing equipment 412, the self-service machine may compare the mobile device identifier received at step 704 to the mobile device identifier communicated by communication circuitry 616 to confirm that they correspond to one another. If at least one mobile device is detected and if a mobile device identifier received from one of the detected mobile devices corresponds to the mobile device identifier received from the consumer, then processing equipment 412 confirms that the consumer's mobile device is proximate to the self-service machine. At step 718, the self-service machine, using for example, communication circuitry 402, communicates the result of the proximity check to the aggregator system.

Alternatively or in addition to step 716, the self-service machine may receive proximity information from the aggregator system. For example, GPS data regarding the location coordinates of the mobile device associated with the mobile device identifier received from the consumer is obtained by the carrier system. The GPS data is then communicated to the aggregator system, which in turn, determines whether, based on the GPS data, the mobile device is within some proximate distance of the self-service machine. In one suitable approach, the self-service machine receives an indication regarding whether the mobile device associated with the received mobile device identifier is within proximity of the self-service machine from the aggregator system based on the GPS data.

In some embodiments, the self-service machine is not provided any proximity information (and need not determine any proximity information, itself). Rather, in such embodiments, the self-service machine only receives an indication from the aggregator system about whether the consumer identity (or information regarding the consumer's identity) has been verified. The aggregator system, in such embodiments, processes proximity information, such as GPS data received from the carrier system, as well as any other relevant data in order to make a final verification determination.

In some embodiments, the self-service machine performs a proximity check but does not communicate the result to the aggregator system. For example, after the self-service machine receives the verification determination from the aggregator system at step 720 (discussed below), and if the verification determination indicates that the consumer's identity or an aspect of the consumer's identify has been verified, then before the self-service proceeds with the transaction, the self-service machine will process the result of the proximity check. If the result indicates that the mobile device associated with the provided mobile device identifier is within a proximate range of the self-service machine, then the self-service machine will determine that verification has succeeded. Otherwise, the self-service machine will determine that despite the aggregator system indicating that verification of the consumer's identify was successful, the self-service machine will determine that the verification was not successful because the mobile device associated with the provided mobile device identifier (and by extension, the consumer) is not at the self-service machine.

At step 720, the self-service machine, using, for example, communication circuitry 402, receives from the aggregator system an indication that the consumer is either verified to proceed with the desired transaction or is not verified to proceed with the desired transaction. If verified, the self-service machine proceeds with the desired transaction with the consumer.

Referring to FIG. 8, which illustrates the aggregator system-side process, at step 802, the aggregator system, using, for example, communication circuitry 302, receives the mobile device identifier that was received by the self-service machine at step 704 or any other suitable data indicative of the mobile device identifier. At step 804, the aggregator system, using processing equipment 320 and communication circuitry 302, generates a verification message and communicates the verification message to the mobile device associated with the mobile device identifier. For example, in some embodiments, the aggregator system generates an SMS message containing, for example, a URL link or any other suitable link, a code, any suitable instruction, or any combination thereof. The message is communicated to the mobile device associated with the mobile device identifier using communication circuitry 302 over, for example, a carrier network provided by the carrier system. In another suitable approach, the aggregator system communicates, using communication circuitry 302, a notification to the mobile device associated with the mobile device identifier, which is processed and provided to the mobile device user (i.e., the consumer) using a proprietary software application installed on the mobile device provided by the aggregator system. It will be understood that any suitable technique for communicating the verification message to the mobile device associated with the mobile device identifier may be used.

At step 806, the aggregator system receives, using for example communication circuitry 302, a response to the verification message. The response is generated when the consumer receives the verification message and performs the requisite verification procedure. A verification procedure may be, for example, selecting an embedded link within the verification message that links to a server-side process at the aggregator system for detecting that the link was selected. In another suitable approach, the verification procedure may be, for example, directing the consumer to call a provided phone number and to enter a verification code when prompted, which is processed by the aggregator system to detect that the consumer has called and entered a correct code. Any such suitable technique or any combination of such techniques may be used to verify that the consumer has received the verification message on the mobile device associated with the mobile device identifier. This allows the aggregator system to determine, using, for example, processing equipment 320, that the consumer attempting to conduct the transaction at the self-service machine is at least in control of the mobile device associated with the mobile device identifier at step 808.

At step 810, the aggregator system, using, for example, communication circuitry 302, communicates to the carrier system a request for CRM information associated with the account corresponding to the mobile device identifier. Because the aggregator system is an entity that is trusted by the carrier system (i.e., the aggregator system is white-listed by the carrier system), the carrier system will provide the aggregator system with the requested CRM information. The CRM information may be any specific CRM information requested by the aggregator system, all available CRM information for the specified account, or a particular predefined set of CRM information associated with the aggregator system. When allowed to specify the CRM information desired, the aggregator system, using processing equipment 320, may determine which CRM information to request based on the type of self-service machine is requesting consumer identity verification. For example, if the self-service machine is a tobacco or alcohol vending machine, then the aggregator system will request from the carrier system CRM information that includes at least information corresponding to the date of birth, age, or both of the user with which mobile device identifier is associated. It will be understood that CRM information may be provided by the carrier system in any suitable format readable by the aggregator system in order to process the CRM information for the purpose of verifying the consumer identity, including generating knowledge-based authentication queries. The CRM information is received by the aggregator system, using, for example, communication circuitry 320, at step 812 from the carrier system.

It will be understood that a single account can have more than one mobile device, each with a respective mobile device identifier, and each with a respective user identity. The CRM information, in such cases, will be provided with respect to the user associated with the particular mobile device identifier received at step 704.

At step 814, the aggregator system, using processing equipment 320, generates one or more knowledge-based authentication queries based on the CRM information, any other suitable information, or any combination thereof. A knowledge-based authentication query may include any suitable question regarding an aspect of the user with which the mobile device identifier is associated. Ideally, the answer to this question would be likely known by the user but not likely known by anyone else. Examples of a knowledge-based authentication query include a prompt for a social security number, a home telephone number, a home or work address (such as a previous address), a favorite movie, mother's maiden name, any other suitable query, or any combination thereof. The knowledge-based authentication query may be in the form a multiple choice question in which a question is associated with two or more answer choice, only one of which is correct. The incorrect answer choices may be generated by the aggregator system or they may be provided by the carrier system as part of the CRM information. The knowledge-based authentication queries are communicated to the self-service machine, using for example, communication circuitries 302 and 320 and are used as by the self-service machine as discussed above with respect to steps 708, 710, 712, and 714.

At step 818, the aggregator system, using processing equipment 320, determines of the responses to the knowledge-based authentication queries communicated by the self-service machine to the aggregator system at step 714 are correct. The aggregator system may determine the number of questions answered correctly, for example, and store this number in storage system 322 for use at step 822. Alternatively, the aggregator may store a binary indication that all of the questions were answered correctly or that not all of the questions were answered correctly. It will be understood that any suitable information related to the responses provided by the consumer and communicated to the aggregator system may be stored and may be processed in any suitable way to determine if the consumer has adequately demonstrated that the consumer is the user associated with the mobile device identifier received at step 704. The knowledge-based authentication queries are thus used by the aggregator system to determine whether the consumer is the legitimate user of the mobile device associated with the mobile device identifier (i.e., as opposed to, for example, an unauthorized person in possession of the mobile device).

At step 820, the aggregator system determines, using, for example, processing equipment 320, proximity information of the mobile device associated with the mobile identifier with respect to the self-service machine. In some embodiments, the proximity information is an indication of whether the mobile device is within a particular proximate range of the self-service machine (e.g., within 100 feet, within 2 feet, etc.). As previously described with respect to steps 716 and 718, the self-service machine may determine whether the mobile device is proximate to the self-service machine and communicate this information to the aggregator system. In some embodiments, the carrier system may provide GPS data about the mobile device associated with the mobile device identifier received at step 704 as part of the CRM information received by the aggregator system at step 812. The self-service machine processes the proximity information provided by the self-service machine, by the carrier system, or both and determines whether the mobile device associated with the received mobile device identifier is proximate to the self-service machine. This determination allows the aggregator system to recognize whether the consumer is in possession of the mobile device while attempting to conduct the desired transaction at the self-service machine.

At step 822, the aggregator system, using processing equipment 320 and the information stored from at least steps 808, 818, and 820 (i.e., whether the mobile device associated with the received mobile device identifier is within the control of the consumer, whether the consumer is the user associated with the mobile device identifier at the carrier system, and whether the mobile device associated with the mobile device identifier is in the possession of the consumer at the self-service machine) verifies the consumer's identity or at least an aspect of the user's identity. In some embodiments, the aggregator system determines what kind of verification to perform based on, for example, the type of self-service machine making the verification request, the type of transaction being attempted by the consumer, based on any other suitable criteria, or any combination thereof. For example, if a consumer is attempting to purchase alcohol at a vending machine, the aggregator system may be configured to provide verification that the consumer is likely at least the legal age required for purchasing alcohol, whereas if a consumer is attempting to withdraw cash at an ATM, the aggregator system will be configured to provide verification that the identity of the consumer is likely that of the bank account holder.

In some embodiments, verification is made when all three components are satisfied: 1) the aggregator system confirmed that the mobile device is within the control of the consumer at step 808 when the verification message is received by the consumer and acted upon, 2) the aggregator system confirmed that at least a minimum number of knowledge-based authentication queries are correctly answered by the consumer at the self-service machine at step 818, and 3) the aggregator system determines that the mobile device associated with the provided mobile device identifier is within the proximity of the self-service machine. In some embodiments, less than all three of these components are necessary in order for the aggregator system to determine to make the requested verification. In some embodiments, these three components may be serially processed such that if one component fails verification, then the aggregator system communicates to the self-service machine that the verification has failed and the self-service machine does not proceed with the transaction and no further components are processed. For example, if the aggregator system cannot confirm that the verification message was received by the consumer on the mobile device associated with the received mobile device identifier, the aggregator system will not perform any knowledge-based authentication query processing and will not perform any processing to determine if the mobile device is proximate to the self-service machine. It will be understood that the verification components may be processed in any suitable order and not necessarily in the order as illustrated in FIGS. 7 and 8. In some embodiments, at least two of the verification components may be processed in parallel. For example, the proximity verification may be processed while either of the verification message or the knowledge-based authentication query verification is processed.

At step 824, the aggregator system, using, for example, communication circuitry 320, communicates the result of the verification of the consumer's identity or an aspect of the consumer's identity to self-service machine 824. In some embodiments, the result is a binary indicator that the consumer was either successfully verified or that the consumer was not successfully verified. In some embodiments, the aggregator system indicates the particular reason or reasons that the consumer was not verified.

It will be understood that the steps of FIGS. 7 and 8 are merely exemplary and that in some implementations, steps may be added, removed, omitted, repeated, reordered, modified in any other suitable way, or any combination thereof.

The foregoing is merely illustrative of the principles of this disclosure, and various modifications may be made by those skilled in the art without departing from the scope of this disclosure. The above-described embodiments are presented for purposes of illustration and not of limitation. The present disclosure also can take many forms other than those explicitly described herein. Accordingly, it is emphasized that this disclosure is not limited to the explicitly disclosed methods, systems, and apparatuses, but is intended to include variations to and modifications thereof, which are within the spirit of the following claims.

### Further statements of invention A:

1. A method for verifying at least one aspect of an identify of a user of a self-service machine, the method comprising:
   receiving a mobile device identifier inputted by the user at the self-service machine;
   communicating, using the communications circuitry, a verification message to a mobile device associated with the mobile device identifier;
   receiving, using the communications circuitry, a response to the verification message;
   confirming, using processing circuitry, that the mobile device associated with the mobile device identifier is in possession of the user based on the response;
   communicating, using the communications circuitry, the mobile device identifier to a carrier system associated with a service network on which the mobile device operates;
   receiving, using the communications circuitry, from the carrier system CRM information about a user associated that corresponds to the mobile device identifier;
   communicating, using the communications circuitry, to the self-service machine at least one knowledge-based authentication query based on the CRM information;
   receiving, using the communications circuitry, from the self-service machine a response to the at least one knowledge-based authentication query provided by the user;
   determining, using the processing circuitry, whether the response to the at least one knowledge-based authentication query provided by the user is correct;
   determining, using the processing circuitry, that the mobile device associated with the mobile identifier is within a particular proximity of the self-service machine;
   verifying, using the processing circuitry, the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine; and
   communicating, using the communications circuitry, to the self-service machine that the at least one aspect of the identity of the user has been verified.
2. The method of statement 1, wherein communicating the verification message to the mobile device associated with the mobile device identifier comprises communicating to the mobile device associated with the mobile device identifier an SMS message.
3. The method of statement 1, wherein the verification message comprises a link, and wherein receiving the response to the verification message comprises receiving an indication that the link was selected from the mobile device associated with the mobile device identifier.
4. The method of statement 1, wherein receiving CRM information comprises receiving at least one of date of birth information, name information, address information, telephone number information, and any combination thereof.
5. The method of statement 1, wherein communicating at least one knowledge-based authentication query comprises communicating at least one knowledge-based question and a plurality of associated multiple choice answers.
6. The method of statement 1, wherein determining that the mobile device associated with the mobile device identifier is within a particular proximity of the self-service machine comprises receiving GPS data about the location of the mobile device associated with the mobile device identifier from the carrier system.
7. The method of statement 1, wherein the self-service machine is an automated teller machine.
8. The method of statement 1, wherein the self-service machine is a vending machine.
9. The method of statement 1, wherein the self-service machine is a point of sale device.
10. An aggregator system communicatively coupled to a self-service machine, comprising:
   communications circuitry coupled to at least one network and configured to:
      receive a mobile device identifier inputted by the user at the self-service machine;
      communicate a verification message to a mobile device associated with the mobile device identifier,
      receive a response to the verification message,
      communicate the mobile device identifier to a carrier system associated with a service network on which the mobile device operates,
      receive from the carrier system CRM information about a user associated with the mobile device identifier,
      communicate to the self-service machine at least one knowledge-based authentication query based on the CRM information,
      receive from the self-service machine a response to the at least one knowledge-based authentication query provided by the user, and
      communicate to the self-service machine that the at least one aspect of the identity of the user has been verified; and
      processing circuitry coupled to the communications circuitry and configured to:
         confirm that the mobile device associated with the mobile device identifier is in possession of the user based on the response,
         determine whether the response to the at least one knowledge-based authentication query provided by the user is correct,
         determine that the mobile device associated with the mobile identifier is within a particular proximity of the self-service machine, and
         verify the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine.
11. The aggregator system of statement 10, wherein the verification message comprises an SMS message.
12. The aggregator system of statement 10, wherein the verification message comprises a link, and wherein the response to the verification message comprises an indication that the link was selected from the mobile device associated with the mobile device identifier.
13. The aggregator system of statement 10, wherein the CRM information comprises at least one of date of birth information, name information, address information, telephone number information, and any combination thereof.
14. The aggregator system of statement 10, wherein the at least one knowledge-based authentication query comprises at least one knowledge-based question and a plurality of associated multiple choice answers.
15. The aggregator system of statement 10, wherein the communications circuitry is further configured to receive GPS data about the location of the mobile device associated with the mobile device identifier from the carrier system, and wherein the processing circuitry is further configured to determine that the mobile device associated with the mobile device identifier is within a particular proximity of the self-service machine comprises based on the GPS data.
16. The aggregator system of statement 10, wherein the self-service machine is an automated teller machine.
17. The aggregator system of statement 1, wherein the self-service machine is a vending machine.
18. The aggregator system of statement 1, wherein the self-service machine is a point of sale device.
19. A computer readable medium having computer program instructions recorded thereon for performing the method comprising:
   receiving, using communications circuitry, a mobile device identifier inputted by a user at a self-service machine;
   communicating, using the communications circuitry, a verification message to a mobile device associated with the mobile device identifier;
   receiving, using the communications circuitry, a response to the verification message;
   confirming, using processing circuitry, that the mobile device associated with the mobile device identifier is in possession of the user based on the response;
   communicating, using the communications circuitry, the mobile device identifier to a carrier system associated with a service network on which the mobile device operates;
   receiving, using the communications circuitry, from the carrier system CRM information about a user that corresponds to the mobile device identifier;
   communicating, using the communications circuitry, to the self-service machine at least one knowledge-based authentication query based on the CRM information;
   receiving, using the communications circuitry, from the self-service machine a response to the at least one knowledge-based authentication query provided by the user;
   determining, using the processing circuitry, whether the response to the at least one knowledge-based authentication query provided by the user is correct;
   determining, using the processing circuitry, that the mobile device associated with the mobile identifier is within a particular proximity of the self-service machine;
   verifying, using the processing circuitry, the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine; and
   communicating, using the communications circuitry, to the self-service machine that the at least one aspect of the identity of the user has been verified.
20. The computer-readable medium of statement 19, wherein communicating the verification message to the mobile device associated with the mobile device identifier comprises communicating to the mobile device associated with the mobile device identifier an SMS message.
21. The computer-readable medium of statement 19, wherein the verification message comprises a link, and wherein receiving the response to the verification message comprises receiving an indication that the link was selected from the mobile device associated with the mobile device identifier.
22. The computer-readable medium of statement 19, wherein receiving CRM information comprises receiving at least one of date of birth information, name information, address information, telephone number information, and any combination thereof.
23. The computer-readable medium of statement 19, wherein communicating at least one knowledge-based authentication query comprises communicating at least one knowledge-based question and a plurality of associated multiple choice answers.
24. The computer-readable medium of statement 19, wherein determining that the mobile device associated with the mobile device identifier is within a particular proximity of the self-service machine comprises receiving GPS data about the location of the mobile device associated with the mobile device identifier from the carrier system.

### Further Statements of Invention B

1. A method for verifying at least one aspect of an identity of a user of a self-service machine, the method comprising:
   receiving, using communications circuitry of an aggregator system that is communicatively coupled to the self-service machine, a mobile device identifier inputted by the user at the self-service machine;
   communicating, using the communications circuitry of the aggregator system, a verification message to a mobile device associated with the mobile device identifier;
   receiving, using the communications circuitry of the aggregator system, a response to the verification message;
   confirming, using processing circuitry of the aggregator system, that the mobile device associated with the mobile device identifier is in possession of the user based on the response;
   communicating, using the communications circuitry of the aggregator system, the mobile device identifier to a carrier system that provides a mobile network service to the mobile device;
   receiving, using the communications circuitry of the aggregator system, from the carrier system (Customer Relationship Management) CRM information about a user that corresponds to the mobile device identifier;
   generating, using the processing circuitry of the aggregator system, at least one knowledge-based authentication query based on the CRM information;
   communicating, using the communications circuitry of the aggregator system, to the self-service machine the at least one knowledge-based authentication query;
   receiving, using the communications circuitry of the aggregator system, from the self-service machine a response to the at least one knowledge-based authentication query provided by the user;
   determining, using the processing circuitry of the aggregator system, whether the response to the at least one knowledge-based authentication query provided by the user is correct;
   determining, using the processing circuitry of the aggregator system, that the mobile device associated with the mobile identifier is within a particular proximity of the self-service machine;
   verifying, using the processing circuitry of the aggregator system, the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine; and
   communicating, using the communications circuitry of the aggregator system, to the self-service machine that the at least one aspect of the identity of the user has been verified.
2. The method of statement 1, wherein communicating the verification message to the mobile device associated with the mobile device identifier comprises communicating to the mobile device associated with the mobile device identifier an SMS message.
3. The method of statement 1, wherein the verification message comprises a link, and wherein receiving the response to the verification message comprises receiving an indication that the link was selected from the mobile device associated with the mobile device identifier.
4. The method of statement 1, wherein receiving CRM information comprises receiving at least one of date of birth information, name information, address information, telephone number information, and any combination thereof.
5. The method of statement 1, wherein communicating at least one knowledge-based authentication query comprises communicating at least one knowledge-based question and a plurality of associated multiple choice answers.
6. The method of statement 1, wherein determining that the mobile device associated with the mobile device identifier is within a particular proximity of the self-service machine comprises receiving GPS data about the location of the mobile device associated with the mobile device identifier from the carrier system.
7. The method of statement 1, wherein the self-service machine is an automated **teller machine**.
8. The method of statement 1, wherein the self-service machine is a vending machine.
9. The method of statement 1, wherein the self-service machine is a point of sale device.
10. An aggregator system communicatively coupled to a self-service machine, comprising:
   communications circuitry coupled to at least one network and configured to:
      receive a mobile device identifier inputted by the user at the self-service machine;
      communicate a verification message to a mobile device associated with the mobile device identifier,
      receive a response to the verification message,
      communicate the mobile device identifier to a carrier system that provides a mobile network service to the mobile device,
      receive from the carrier system (Customer Relationship Management) CRM information about a user associated with the mobile device identifier,
      communicate to the self-service machine at least one knowledge-based authentication query ,
      receive from the self-service machine a response to the at least one knowledge-based authentication query provided by the user, and
      communicate to the self-service machine that the at least one aspect of the identity of the user has been verified; and
      processing circuitry coupled to the communications circuitry and configured to:
         confirm that the mobile device associated with the mobile device identifier is in possession of the user based on the response,
         generate the at least one knowledge-based authentication query based on the CRM information,
         determine whether the response to the at least one knowledge-based authentication query provided by the user is correct,
         determine that the mobile device associated with the mobile identifier is within a particular proximity of the self-service machine, and
         verify the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine.
11. The aggregator system of statement 10, wherein the verification message comprises an SMS message.
12. The aggregator system of statement 10, wherein the verification message comprises a link, and wherein the response to the verification message comprises an indication that the link was selected from the mobile device associated with the mobile device identifier.
13. The aggregator system of statement 10, wherein the CRM information comprises at least one of date of birth information, name information, address information, telephone number information, and any combination thereof.
14. The aggregator system of statement 10, wherein the at least one knowledge-based authentication query comprises at least one knowledge-based question and a plurality of associated multiple choice answers.
15. The aggregator system of statement 10, wherein the communications circuitry is further configured to receive GPS data about the location of the mobile device associated with the mobile device identifier from the carrier system, and wherein the processing circuitry is further configured to determine that the mobile device associated with the mobile device identifier is within a particular proximity of the self-service machine comprises based on the GPS data.
16. The aggregator system of statement 10, wherein the self-service machine is an automated teller machine.
17. The aggregator system of statement 1, wherein the self-service machine is a vending machine.
18. The aggregator system of statement 1, wherein the self-service machine is a point of sale device.
19. A computer readable medium comprising:
   computer program instructions recorded thereon, wherein the computer program instructions, when executed by an aggregator system, cause the aggregator system, to perform operations comprising:
      receiving, using communications circuitry of the aggregator system, a mobile device identifier inputted by a user at a self-service machine;
      communicating, using the communications circuitry of the aggregator system, a verification message to a mobile device associated with the mobile device identifier;
      receiving, using the communications circuitry of the aggregator system, a response to the verification message;
      confirming, using processing circuitry of the aggregator system, that the mobile device associated with the mobile device identifier is in possession of the user based on the response;
      communicating, using the communications circuitry of the aggregator system, the mobile device identifier to a carrier system that provides a mobile network service to the mobile device;
      receiving, using the communications circuitry of the aggregator system, from the carrier system (Customer Relationship Management) CRM information about a user that corresponds to the mobile device identifier;
      generating, using the processing circuitry of the aggregator system, at least one knowledge-based authentication query based on the CRM information;
      communicating, using the communications circuitry of the aggregator system, to the self-service machine the least one knowledge-based authentication query;
      receiving, using the communications circuitry of the aggregator system from the self-service machine a response to the at least one knowledge-based authentication query provided by the user;
      determining, using the processing circuitry of the aggregator system, whether the response to the at least one knowledge-based authentication query provided by the user is correct;
      determining, using the processing circuitry of the aggregator system, that the mobile device associated with the mobile identifier is within a particular proximity of the self-service machine;
      verifying, using the processing circuitry of the aggregator system, the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine; and
      communicating, using the communications circuitry of the aggregator system, to the self-service machine that the at least one aspect of the identity of the user has been verified.
20. The computer-readable medium of statement 19, wherein communicating the verification message to the mobile device associated with the mobile device identifier comprises communicating to the mobile device associated with the mobile device identifier an SMS message.
21. The computer-readable medium of statement 19, wherein the verification message comprises a link, and wherein receiving the response to the verification message comprises receiving an indication that the link was selected from the mobile device associated with the mobile device identifier.
22. The computer-readable medium of statement 19, wherein receiving CRM information comprises receiving at least one of date of birth information, name information, address information, telephone number information, and any combination thereof.
23. The computer-readable medium of statement 19, wherein communicating at least one knowledge-based authentication query comprises communicating at least one knowledge-based question and a plurality of associated multiple choice answers.
24. The computer-readable medium of statement 19, wherein determining that the mobile device associated with the mobile device identifier is within a particular proximity of the self-service machine comprises receiving GPS data about the location of the mobile device associated with the mobile device identifier from the carrier system.

## Claims

1. A method for verifying at least one aspect of an identity of a user of a self-service machine, the method **characterized by** using an aggregator system for performing the steps comprising:
receiving a mobile device identifier inputted by the user at the self-service machine;
communicating, using communications circuitry, a verification message to a mobile device associated with the mobile device identifier;
receiving, using the communications circuitry, a response to the verification message;
confirming, using processing circuitry, that the mobile device associated with the mobile device identifier is in possession of the user based on the response;
communicating, using the communications circuitry, the mobile device identifier to a carrier system associated with a service network on which the mobile device operates;
receiving, using the communications circuitry, from the carrier system Customer Relationship Management (CRM) information about a user that corresponds to the mobile device identifier;
communicating, using the communications circuitry, to the self-service machine at least one knowledge-based authentication query based on the CRM information;
receiving, using the communications circuitry, from the self-service machine a response to the at least one knowledge-based authentication query provided by the user;
determining, using the processing circuitry, whether the response to the at least one knowledge-based authentication query provided by the user is correct;
determining, using the processing circuitry, that the mobile device associated with the mobile identifier is within a particular proximity of the self-service machine;
verifying, using the processing circuitry, the at least one aspect of the identity of the user when it is confirmed that the mobile device associated with the mobile device identifier is in possession of the user, when it is determined that the response to the at least one knowledge-based authentication query provided by the user is correct, and when the mobile device associated with the mobile identifier is within a particular proximity of the self-service machine; and
communicating, using the communications circuitry, to the self-service machine that the at least one aspect of the identity of the user has been verified.

2. The method of claim 1, further comprising performing the step of:
generating, using the communications circuitry, the at least one knowledge-based authentication query based on the CRM information.

3. The method of claim 1 or claim 2, further comprising performing the step of:
requesting, using the communications circuitry, a specific type of CRM information based on the type of the self-service machine.

4. The method of any of claims 1 to 3, wherein receiving CRM information comprises receiving at least one of date of birth information, name information, address information, telephone number information, and any combination thereof.

5. The method of any of claims 1 to 4, wherein communicating at least one knowledge-based authentication query comprises communicating at least one knowledge-based question and a plurality of associated multiple choice answers.

6. The method of any of claims 1 to 5, wherein determining that the response to the at least one knowledge-based authentication query provided by the user is correct, and determining that the mobile device associated with the mobile identifier is within a particular proximity of the self-service machine are performed in parallel.

7. The method of any of claims 1 to 6, wherein determining that the mobile device associated with the mobile device identifier is within a particular proximity of the self-service machine comprises receiving GPS data about the location of the mobile device associated with the mobile device identifier from the carrier system.

8. The method of any of claims 1 to 7, wherein verifying the at least one aspect of the identity of the user comprises selecting an aspect of the identity of the user for verification based on a type of a transaction with the self-service machine.

9. The method of any of claims 1 to 7, wherein communicating the verification message to the mobile device associated with the mobile device identifier comprises communicating to the mobile device associated with the mobile device identifier an SMS message.

10. The method of any of claims 1 to 7, wherein the verification message comprises a link, and wherein receiving the response to the verification message comprises receiving an indication that the link was selected from the mobile device associated with the mobile device identifier.

11. The method of any of claims 1 to 7, wherein the verification message comprises a telephone number, and wherein receiving the response to the verification message comprises receiving a phone call from the mobile device to the telephone number.

12. The method of any of claims 1 to 11, wherein the self-service machine is an automated teller machine.

13. The method of any of claims 1 to 11, wherein the self-service machine is a vending machine and/or a point of sale device.

14. A system configured to perform the method of any of claims 1-13.

15. A computer readable medium comprising instructions which when performed on a computer effect the steps of the method of claim 1 and preferably of any of claims 2 to 13.
